# EUROPEAN PATENT SPECIFICATION

(11) **EP 3 101 322 B1**
(45) Date of publication and mention of the grant of the patent: **29.08.2018**
(21) Application number: 14880612.8
(22) Date of filing: 12.06.2014
(51) Int. Cl.: F16K 31/26, F16K 33/00, E03D 1/32

(54) **COCK FOR FILLING TANKS**
HAHN ZUM BEFÜLLEN VON TANKS
ROBINET DE REMPLISSAGE DE CITERNES

(30) Priority: 28.01.2014 ES 201430093
(43) Date of publication of application: 07.12.2016
(73) Proprietor: Fominaya, S.A., 46117 Betera, Valencia (ES)
(72) Inventor: FOMINAYA GONZÁLEZ, Pablo, E-46117 Bétera (Valencia) (ES)
(74) Representative: Ballester Cañizares, Rosalia
(86) International application number: PCT/ES2014/070485
(87) International publication number: WO 2015/114178

(56) References cited:
- EP-A1- 0 458 401
- EP-A1- 0 458 401
- EP-A1- 2 312 067
- EP-A1- 2 312 067
- EP-A2- 0 943 851
- ES-A1- 2 353 475
- US-A- 4 299 248
- US-A- 4 600 031
- US-A- 4 703 653
- US-A- 5 904 176
- US-A- 6 003 541
- US-A- 6 123 099
- US-A1- 2005 121 079
- US-B1- 6 666 228

## Description

### OBJECT OF THE INVENTION

The present invention relates to a cock for filling tanks, according to the preamble of claim 1. Based on this premise, the invention focuses on a characteristic means to fasten the float, in order to quickly and effectively adjust its position in terms of height according to the fill volume of the tank desired by the user.

The invention also focuses on the intermediate mechanism that links the float to the valve device, in such a way that this intermediate mechanism gives rise to an effective and practical axial movement of a push piston linked to the valve device.

### BACKGROUND OF THE INVENTION

Numerous cocks for filling tanks are currently known, which generally comprise a water inlet into which a valve device that either allows or blocks the passage of water into the space inside the tank is inserted, such that the valve device is linked to a float, which rises and falls according to the level of the water inside the tank, such that once the desired water level has been reached inside the tank, the valve device is closed, thereby blocking the passage of water into the inside of the tank.

In some tanks, the float is connected to one end of a rod, which is linked by the opposite end section to the valve device in order to either block or free the passage of water to the inside of the tank.

Other more modern floats are coupled around a vertical guide and may be adjusted in height in order to place the same in the desired position according to the level of water inside the tank. In such cases, the height of the float is adjusted by means of a threaded rod coupled to the float, in such a way that the rotation of the threaded rod pulls the float upwards or downwards.

The patents published under publication numbers ES2239877 and ES2353475 relate to cocks for filling tanks, in which the float is coupled around a vertical guide, in such a way that the height of the float may be adjusted by means of a threaded rod.

In this position, rotating this threaded rod in one direction or another makes it is achieved to place the float at the required height in order to fill the tank with a greater or lesser volume of water.

The threaded rod is in turn linked to the valve device, in such a way that as the tank fills up with water, the float is pushed upwards, this push force being transmitted to the valve device, which gradually closes the passage of water until it is completely blocked.

The document EP 0 943 851 discloses a float valve for accumulating water in a lavatory flush tank, and comprising a valve body connected to a rigid downwardly-extending tube; a movable shutter for closing said valve; a chamber connected to said tube and containing a float movable vertically with respect to the chamber; mechanical means for transmitting motion between said float and said shutter; and an adjusting device for adjusting the water level corresponding to closure of said shutter; said adjusting device comprises a single member activated manually to adjust both the position of said chamber and said mechanical means.

The document EP 2 312 067 discloses an adjustable tap for filling toilet tanks based on the fact that the telescopic water inlet pipe is composed of three bodies telescopically connected together, one as an inside tube through which the fastening at the bottom of the toilet tank is carried out, another one as a middle tube externally coupled to the inside tube and coupled thereto through the bottom edge, and the third one externally installed on the middle tube, with the capacity of moving axially from the latter. Said third body, hereinafter called the outside body, has a bottom tubular section with axial recesses into which complementary projections made for this purpose in the bottom section of the middle tube are fastened, allowing the axial movement of said outside body, which from said bottom tubular section continues In a pair of axial sectors, diametrically opposed, reaching the latter a middle section circumferentially closed, but with bottom axial extensions sandwiched between the axial sectors mentioned above, in one axial extension of which a side of the middle tube is positioned in order to avoid the rotation thereof in relation to the outside body.

Finally, the document EP 0 458 401 discloses a float valve with level adjustment especially for water storage cisterns in sanitary installations, composed of a body capable of being connected to the water supply mains, disposed horizontally inside a storage cistern and equipped with a down-pipe with vertical axis, capable of being connected to a chamber containing a slidable float connected, by mechanical transmission and gearing means for the buoyancy thrust from the float, to a closure member slidably housed in said body and creating the seal against a seating of small aperture positioned inside said body when the float is in a raised position, in which said pipe is positioned outside said chamber and between them there is provided, by coupling and guiding means and reversible blocking means, a relative linear sliding between said chamber and said pipe for the purpose of achieving, with appropriate blocking of said means, the adjustment of the level of the edge of the chamber with respect to the bottom of the storage cistern, and in that said means for transmission of the buoyancy thrust to the closure member for shutting-off the water comprise at least one element adjustable in length for the purpose of keeping the stroke of the closure member constant as the level of the chamber varies.

Document EP0943851 is considered as representing the closest prior art. This document discloses all the technical features mentioned in the preamble of claim 1.

### DESCRIPTION OF THE INVENTION

With the aim of fulfilling the objectives and preventing drawbacks, the invention proposes a cock for filling tanks, comprising a hollow head, in which a valve device linked to a float by means of an intermediate device is housed, also comprising a vertical tube connected to the hollow head, where the vertical tube is housed inside a central passage of the float, which moves upwards and downwards according to the rise or fall of the water level inside the tank.

The float is connected to a bush coupled coaxially around the vertical tube, along the length of which the bush moves axially and freely, where the upwards and downwards movement of the float drags the bush when the float is anchored thereto.

The central passage of the float has inner reliefs for axial retention, which complement and interact with protuberances that are integral to the bush as means for fastening the float to the bush when the inner reliefs and the protuberances are aligned and in contact with one another.

The float can rotate relatively with respect to the bush, limited by corresponding longitudinal stops, in such a way that the rotation of the float in one direction or the other frees the axial locking of the float, it therefore being free to be positioned at the required height in the locking position. The bush has free axial movement, and blocked rotational movement with respect to the vertical tube.

Said bush further comprises upper parallel runners. The bush is moved and guided vertically along a number of grooves arranged along the length of the vertical tube, the parallel runners being linked to a lever, which is coupled to the hollow head via an articulated connection.

Near the articulated connection, one end of a connecting rod is connected via a front articulated connection, whilst an opposite end of the connecting rod is connected to a push piston via a rear articulated connection, the push piston being linked to the valve device.

In this position, tilting the lever in one direction axially moves the push piston against the valve device, towards a closed position during the filling of the tank, whilst tilting the lever in the opposite direction frees the passage of fluid through the valve device, owing to the float falling as a result of gravity.

The lever comprises a front fork and a double rear extension, which is coupled at its free end to one portion of the hollow head, via the articulated connection, whilst a connecting rod is also coupled to said double rear extension by the front articulated connection thereof.

End sections of the fork have opposite stubs, which are fitted into and guided in corresponding slots of the parallel runners of the bush coupled and guided in the grooves arranged along the length of the vertical tube connected to the hollow head. The parallel runners are located in the upper portion of the bush.

The rear articulated connection of the connecting rod is a spherical articulation, whilst the front articulated connection of the connecting rod comprises stubs fitted into holes of the double extension that forms part of the lever.

Furthermore, the rotation of the float is limited by longitudinal stops, which starts from the inner surface of the central passage in the float.

The new adjustment system for adjusting the height of the float along with the intermediate device that essentially encompasses the lever and bush succeeds in reducing the size of the cock for filling, in addition to achieving optimal operation.

This reduction in space is very important in order for the cock assembly to be adapted and easily installed in tank designs with shapes that are incredibly detrimental to mounting the inner mechanisms.

In order to facilitate a better understanding of this specification, a set of figures is included below as an integral part thereof, in which the object of the invention is represented by way of illustrative and non-limiting embodiments.

### BRIEF DESCRIPTION OF THE DRAWINGS

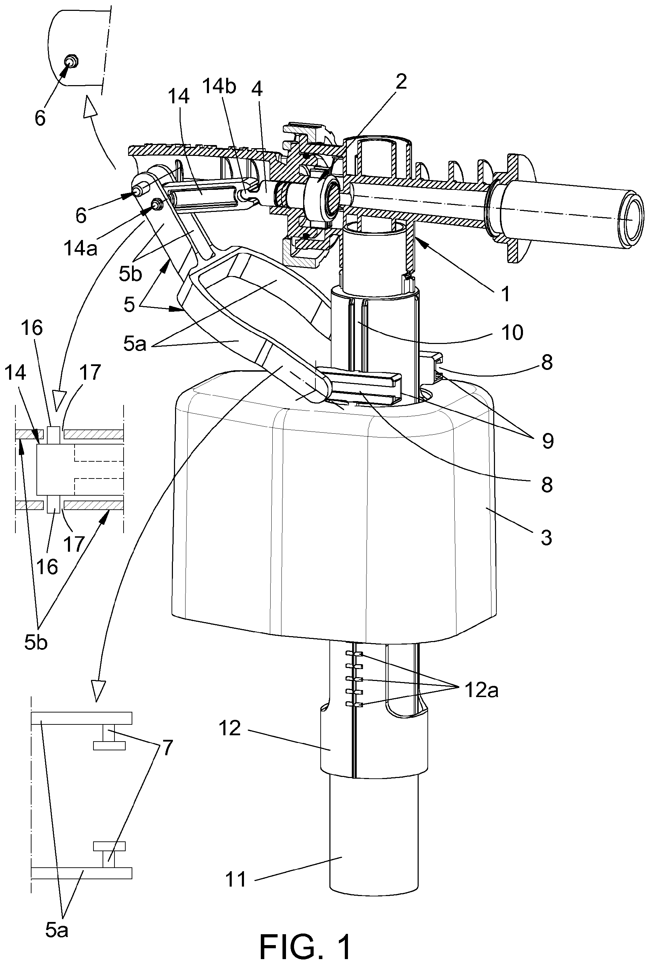

**Figure 1****.-** Shows a perspective view of the cock for filling tanks, object of the invention. It incorporates a valve water passage or blocking device, which is linked to a float by means of an intermediate device. The valve device is shown in a maximum fill opening position, in which a float is located at the lowest position.

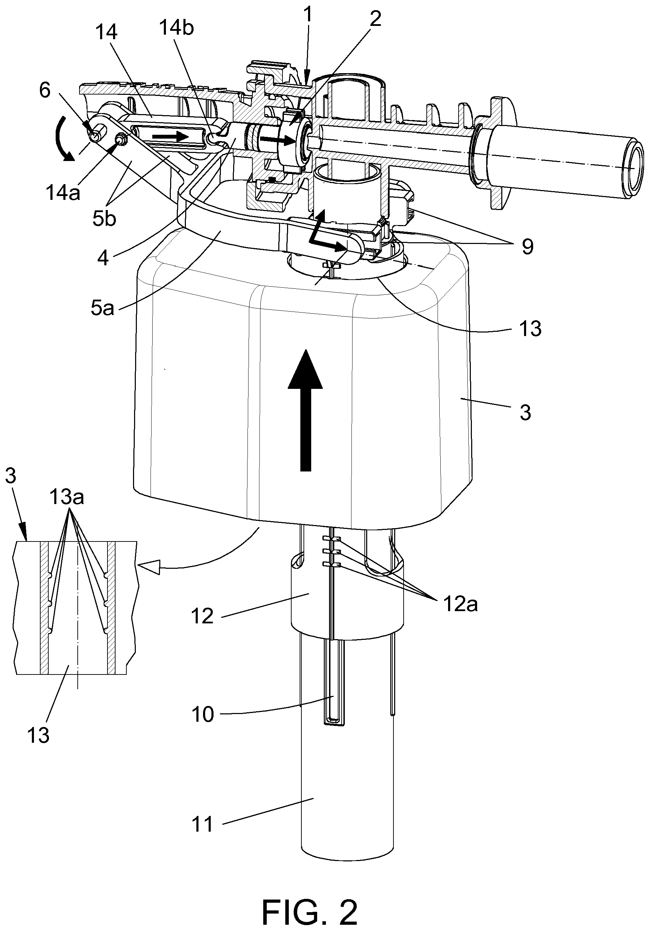

**Figure 2****.-** Shows a similar view to the previous figure, where the valve device is found in a position in which the water passage is blocked.

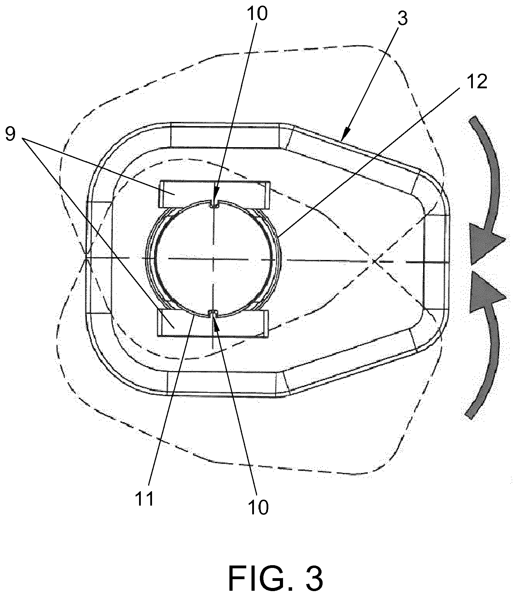

**Figure 3****.-** Shows a plan view of one portion of the cock for filling tanks, where various positions of the float are highlighted: one stable blocking position and two unblocking positions shown with dashed lines, these positions being achieved by rotating the float to the right and to the left.

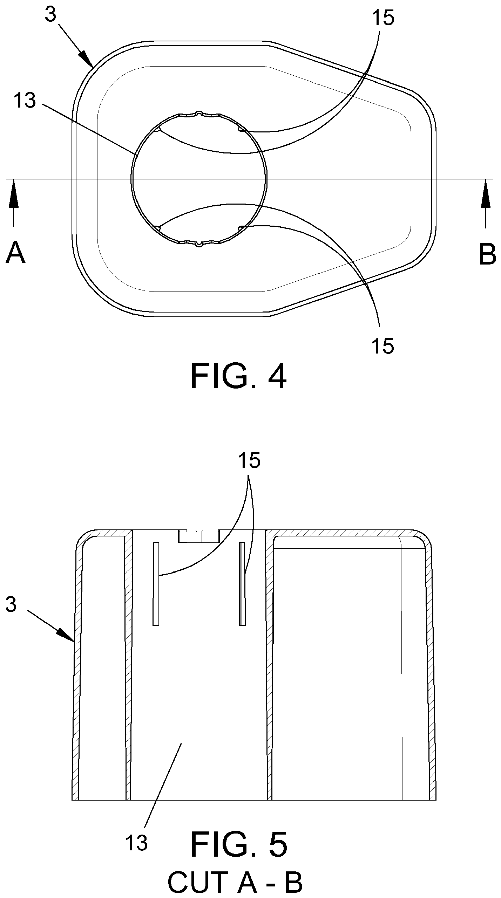

**Figure 4****.-** Shows a plan view of the float.
**Figure 5****.-** Shows a cross-section view cut along line A-B in the previous figure.
**Figures 6 and 7****.-** Show schematic views of two relative positions of the intermediate device and valve device.

### DESCRIPTION OF AN EMBODIMENT OF THE INVENTION

Regarding the numbering adopted in the figures, the cock for filling tanks includes the following nomenclature used in the description:
1. - Hollow head.
2. - Valve device.
3. - Float.
4 - Push piston.
5. - Lever.
5a.- Front fork.
5b.- Double rear extension.
6. - Articulated connection.
7. - Opposite stubs.
8. - Slots.
9. - Parallel runners.
10. - Grooves.
11. - Vertical tube.
12. - bush.
12a.- Protuberances.
13. - Central passage.
13a.- Inner relief.
14. - Connecting rod
14a.- Front articulated connection.
14b.- Rear articulated connection.
15. - Longitudinal stops.
16. - Stubs.
17. - Holes.

It comprises a hollow head (1) inside which a valve device (2) linked to a float (3) by means of an intermediate device is housed in such a way that as the tank fills up with water that passes through the valve device (2), the water itself, that fills the tank, pushes the float (3) upwards, the movement of which is transmitted to the valve device (2), which gradually closes the water passage until the water passage is completely interrupted.

When the tank is flushed, the float (3) moves downwards freeing the water passage through the valve device (2), in such a way that as the tank fills up, it again closes the water passage as described in the paragraph above.

Describing in more detail the cock of the invention, the valve device (2) is activated via a push piston (4) with axial movement, which is linked to a lever (5) with an intervening connecting rod (14).

The lever comprises a front fork (5a) and a double rear extension (5b), which is coupled at its free end to one portion of the hollow head (1) via an articulated connection (6), whilst end sections of the fork (5a) have opposite stubs (7) fitted into and guided in corresponding slots (8) of parallel runners (9) that are integral to a bush (12) coupled around a vertical tube (11) that is joined to the hollow head (1).

The bush (12) is guided and moved vertically in grooves (10) arranged along the length of the vertical tube (11).

Thus, a bush (12) is freely coupled around the aforementioned vertical tube (11) where the float (3) is coaxially coupled. To this end, the float (3) has a central passage (13) coupled around the bush (12), in such a way that the float (3) may be fastened to the bush (12) at different heights according to the volume of water to be contained within the tank. Therefore, the position of the float (3) determines the water level of the tank, in such a way that a lower height closes the valve device (2) sooner with a low water level inside the tank.

The central passage (13) of the float (3) has diametrically opposite inner reliefs (13a) that narrows said central passage (13) and are complemented by and interact with protrusions (12a) that are integral to the bush (12), in such a way that as the float (3) rotates in one direction or another, the axial locking of the float (3) is free to move the same upwards and downwards to the desired height, in such a way that once the intended height is determined, the float (3) is rotated again in the opposite direction towards the blocking position where the inner reliefs (13a) of the central passage (13) and the protuberances (12a) of the bush (12) are in contact and interact with each other.

The rotation of the float (3) is limited by longitudinal stops (15), which originate from the inner surface of the central passage (13) in the float (3).

Near the articulated connection (6) of the double rear extension (5b), there is a front articulated connection (14a) that corresponds to one end of a connecting rod (14), which is connected by its opposite end to the push piston (4) via a rear articulated connection (14b), in such a way that as the tank fills up, the float (3) moves upwards dragging with it the assembly of the bush (12) and parallel runners (9), through the slots (8) of which the opposite stubs (7) of the fork (5a) belonging to the lever (5) slide and are guided.

The rear articulated connection (14b) of the connecting rod (14) is a spherical articulation, whilst the front articulated connection (14a) of the connecting rod (14) comprises stubs (16) fitted into holes (17) in the double extension (5b) that forms part of the lever (5).

The upwards movement of the float (3) also generates the rotation of the lever (5) around the articulated connection (6) thereof, in this operation the central section (14) of the double extension (5b) axially moves the push piston (4) in the closing direction of the valve device (2) until the tank is filled to the required level, the moment at which the water passage is closed via closing the valve device (2).

When the tank is flushed, the operating process is inverted, i.e. the float (4) moves downwards dragging the assembly of the bush (12) and parallel runners (9) along with it, moving downwards as a result of gravity. This downwards movement in turn drags the lever (5), which tilts in the opposite direction to the direction described when the tank is filled, freeing an axially pushing on the push piston (4) that then moves outwards, thus freeing the valve device (2) that again enables water to pass through it.

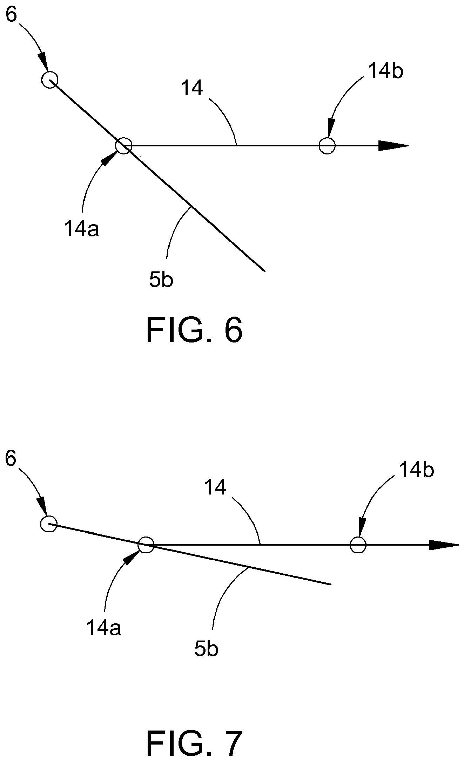

It is worth mentioning that the distance between the articulated connection (6) of the lever (5) and the front articulated connection (14a) is very small and it becomes smaller as the float rises, thus achieving strong thrust torque, as shown in figures 6 and 7. Thus, the axial force transmitted to the push piston (4) is high during the rotation of the lever (5), pushed by the upwards movement of the float (4), the latter being pushed in turn by the rising water level inside the tank.

## Claims

1. A cock for filling tanks, which comprises:
a hollow head (1), inside which a valve device (2) linked to a float (3) by means of an intermediate device is housed, also comprising a vertical tube (11) connected to the hollow head (1), where the vertical tube (11) is housed inside a central passage (13) in the float (3), which moves upwards and downwards according to a rising and falling water level in the tank;
wherein the float (3) is connected to a bush (12) coaxially coupled around the vertical tube (11), along the length of which the bush (12) moves freely and axially;
the cock comprising furthermore a connecting rod (14); **characterized in that**
the bush (12) incorporates parallel runners (9), where the bush (12) is moved and guided vertically in grooves (10) arranged along the vertical tube (11); the parallel runners (9) being linked to a lever (5), which is coupled to the hollow head (1) via an articulated connection (6);
wherein one end of the connecting rod (14) is connected via a front articulated connection (14a) to the lever (5), whilst an opposite end of the connecting rod (14) is connected to a push piston (4) via a rear articulated connection (14b), the push piston (14) being linked to the valve device (2); and
wherein the lever (5) tilting in one direction axially moves the push piston (4) against the valve device (2) towards a closed position; the lever (5) comprises a front fork (5a) whose end sections have opposite stubs (7) which are fitted into and guided in corresponding slots (8) of the parallel runners (9) located in the upper portion of the bush (12),
and wherein the lever (5) comprises a double rear extension (5b), which is coupled at its free end to one portion of the hollow head (1), via the articulated connection (6), whilst a connecting rod (14) is also coupled to said double rear extension (5b) by the front articulated connection (14a) thereof.

2. The cook for filling tanks of claim 1 wherein:
the central passage (13) of the float (3) has inner axial retention reliefs (13a), which complement one another and interact with protuberances (12a) that are integral to the bush (12) as means for anchoring the float (3) to the bush (12) when the inner reliefs (13a) and the protuberances (12a) are aligned and in contact with one another; and
the float (3) is suitable for rotating relatively with respect to the bush (12); where the rotation of the float (3) in one direction or another frees the axial locking of the float (3), it therefore being free to be positioned at the required height in the locking position.

3. The cock for filling tanks, according to any one of the previous claims wherein the bush (12) has free axial movement, and blocked rotational movement with respect to the vertical tube (11).

4. The cock for filling tanks, according to claim 1 wherein the rear articulated connection (14b) of the connecting rod (14) is a spherical articulation.

5. The cock for filling tanks, according to any of the previous claims 1 or 4 wherein the front articulated connection (14a) of the connecting rod (14) comprises stubs (16) fitted into holes (17) of the double extension (5b), which forms part of the lever (5).

6. The cock for filling tanks, according to any one of the previous claims wherein the rotation of the float (3) is limited by longitudinal stops (15), which starts from the inner surface of the central passage (13) of the float (3).

## Patentansprüche

1. Ein Hahn zum Füllen von Tanks, umfassend:
einen Hohlkopf (1), in dem eine Ventilvorrichtung (2) untergebracht ist, die über eine Zwischenvorrichtung mit einem Schwimmer (3) verbunden ist, sowie ein vertikales Rohr (11), das mit dem Hohlkopf (1) verbunden ist, worin das vertikale Rohr (11) in einem zentralen Durchgang (13) in dem Schwimmer (3) untergebracht ist, der sich folglich einem steigenden und fallenden Wasserstand in dem Tank nach oben und unten bewegt;
worin der Schwimmer (3) mit einer Buchse (12) verbunden ist, die koaxial um das vertikale Rohr (11) herum gekoppelt ist, entlang dessen Länge sich die Buchse (12) frei und axial bewegt; wobei der Hahn ferner eine Verbindungsstange (14) umfasst;
**ist dadurch gekennzeichnet, dass**
die Buchse (12) Parallelkufen (9) umfasst, wobei die Buchse (12) vertikal in Nuten (10) bewegt und geführt wird, die entlang des vertikalen Rohres (11) angeordnet sind; wobei die Parallelkufen (9) mit einem Hebel (5) verbunden sind, der über eine Gelenkverbindung (6) mit dem Hohlkopf (1) gekoppelt ist;
wobei ein Ende der Pleuelstange (14) über eine vordere Gelenkverbindung (14a) mit dem Hebel (5) verbunden ist, während ein entgegengesetztes Ende der Pleuelstange (14) über eine hintere Gelenkverbindung (14b) mit einem Druckkolben (4) verbunden ist, wobei der Druckkolben (14) mit der Ventileinrichtung (2) verbunden ist; und
wobei der in eine Richtung kippende Hebel (5) den Druckkolben (4) gegen die Ventileinrichtung (2) axial in eine Schließstellung bewegt; der Hebel (5) eine Vordergabel (5a) umfasst, deren Endabschnitte gegenüberliegende Stummel (7) aufweisen, die in entsprechende Schlitze (8) der im oberen Abschnitt der Buchse (12) angeordneten parallelen Kufen (9) eingesetzt und geführt sind, und wobei der Hebel (5) eine doppelte hintere Verlängerung (5b) umfasst, die an ihrem freien Ende mit einem Abschnitt des Hohlkopfes (1) über eine Gelenkverbindung (6) gekoppelt ist, während eine Verbindungsstange (14) ebenfalls mit der doppelten hinteren Verlängerung (5b) durch deren vordere Gelenkverbindung (14a) gekoppelt ist.

2. Der Hahn zum Füllen von Tanks nach Anspruch 1, worin:
der zentrale Durchgang (13) des Schwimmers (3) innere axiale Halteentlastungen (13a) umfasst, die einander ergänzen und mit Vorsprüngen (12a) zusammenwirken, die mit der Buchse (12) als Mittel zur Verankerung des Schwimmers (3) an der Buchse (12) verbunden sind, wenn die inneren Entlastungen (13a) und die Vorsprünge (12a) ausgerichtet und miteinander in Kontakt sind; und
der Schwimmer (3) relativ zur Buchse (12) drehbar ist; wobei die Drehung des Schwimmers (3) in die eine oder andere Richtung die axiale Verriegelung des Schwimmers (3) freigibt, so dass er in der Verriegelungsstellung frei in der gewünschten Höhe positioniert werden kann.

3. Der Hahn zum Befüllen von Tanks nach einem der vorstehenden Ansprüche wobei die Buchse (12) eine freie axiale Bewegung und eine blockierte Drehbewegung in Bezug auf das vertikale Rohr (11) umfasst.

4. Der Hahn zum Befüllen von Tanks nach Anspruch 1, wobei die hintere Gelenkverbindung (14b) der Pleuelstange (14) ein Kugelgelenk ist.

5. Der Hahn zum Befüllen von Tanks nach einem der vorstehenden Ansprüche 1 oder 4, worin die vordere Gelenkverbindung (14a) der Pleuelstange (14) Stutzen (16) u, die in Bohrungen (17) der doppelten Verlängerung (5b), die Teil des Hebels (5) ist, eingesetzt sind.

6. Der Hahn zum Befüllen von Tanks nach einem der vorstehenden Ansprüche, wobei die Drehung des Schwimmers (3) durch Längsanschläge (15) begrenzt ist, die von der Innenfläche des mittleren Durchgangs (13) des Schwimmers (3) ausgehen.

## Revendications

1. Robinet de remplissage de réservoirs, qui comprend :
une tête creuse (1), à l'intérieur de laquelle est logé un dispositif de vanne (2) relié à un flotteur (3) au moyen d'un dispositif intermédiaire, comprenant également un tube vertical (11) relié à la tête creuse (1), dans lequel le tube vertical (11) est logé à l'intérieur d'un passage central (13) dans le flotteur (3), qui se déplace vers le haut et vers le bas en fonction d'augmentation ou diminution du niveau de l'eau dans le réservoir, dans lequel le flotteur (3) est relié à une bague (12) couplée coaxialement autour du tube vertical (11), le long duquel la bague (12) se déplace librement et axialement ; le robinet comprenant en outre une bielle (14) ;
**caractérisé par le fait que**
la bague (12) incorpore des glissières parallèles (9), dans lesquelles la bague (12) est déplacée et guidée verticalement dans des rainures (10) disposées le long du tube vertical (11), les glissières parallèles (9) étant reliées à un levier (5), qui est accouplé à la tête creuse (1) par un raccordement articulé (6);
dans laquelle une extrémité de la bielle (14) est connectée par l'intermédiaire d'un raccordement articulé avant (14a), sur le levier (5), tandis qu'une extrémité opposée de la bielle (14) est connectée à un piston de poussée (4) par l'intermédiaire d'une connexion articulée arrière (14b), le piston de poussée (14) étant relié au dispositif de vanne (2); et
dans laquelle le levier (5) basculant dans une direction déplace axialement le piston de poussée (4) contre le dispositif de vanne (2) vers une position fermée ; le levier (5) comprend une fourche avant (5a) dont les sections d'extrémité ont des bouts opposés (7) qui sont montés et guidés dans des fentes correspondantes (8) des patins parallèles (9) situés dans la partie supérieure de la bague(12), et dans lequel le levier (5) comprend une double extension arrière (5b), qui est couplée à son extrémité libre à une partie de la tête creuse (1), via une connexion articulée (6), tandis qu'une bielle (14) est également couplée à ladite double extension arrière (5b) par la connexion articulée avant (14a) de celle-ci.

2. Le robinet de remplissage de réservoirs de la revendication 1, où
le passage central (13) du flotteur (3) présente des reliefs de rétention axiale intérieure (13a), qui se complètent et interagissent avec les protubérances (12a) qui font partie intégrante de la bague (12) en tant que moyens d'ancrage du flotteur (3) à la bague (12) lorsque les reliefs intérieurs (13a) et les protubérances (12a) sont alignés et en contact les uns avec les autres; et
le flotteur (3) est apte à se déplacer en rotation relativement par rapport à la bague (12); lorsque la rotation du flotteur (3) dans une direction ou dans une autre libère le blocage axial du flotteur (3), il est donc libre de se positionner à la hauteur requise en position de verrouillage.

3. Le robinet de remplissage de réservoirs, selon l'une ou l'autre des revendications précédentes, dans lequel la bague (12) a un mouvement axial libre et bloque le mouvement de rotation par rapport au tube vertical (11).

4. Le robinet de remplissage de réservoirs, selon la revendication 1, dans laquelle le raccord articulé arrière (14b) de la bielle (14) est une articulation sphérique.

5. Le robinet de remplissage de réservoirs, selon l'une ou l'autre de la revendication précédente 1 ou 4, dans lesquelles le raccord articulé avant (14a) de la bielle (14) incorpore des embouts (16) montés dans des orifices (17) de la double extension (5b), qui font partie du levier (5).

6. Le robinet de remplissage de réservoirs, selon l'une ou l'autre des revendications précédentes, dans lesquelles la rotation du flotteur (3) est limitée par des butées longitudinales (15), partant de la surface intérieure du passage central (13) du flotteur (3).
